# DEMANDE DE BREVET EUROPEEN

(11) **EP 4 485 184 A1**
(43) Date de publication de la demande: **01.01.2025**
(21) Numéro de dépôt: 24182722.9
(22) Date de dépôt: 18.06.2024
(51) Int. Cl.: G06F 9/4401, G06F 21/53, G06F 21/57

(54) **PROCEDE DE SELECTION DE PROGRAMMES DE DEMARRAGE**

(30) Priorité: 30.06.2023 FR 2306974
(71) Demandeur: STMicroelectronics International N.V., 1228 Plan-les-Ouates, Geneva (CH)
(72) Inventeur: BENHAMMADI, Jawad, 38800 LE PONT DE CLAIX (FR)
(74) Mandataire: Cabinet Beaumont

(57) **Abrégé**

La présente description concerne un procédé de sélection de programmes de démarrage (init, boot1) contenus chacun dans deux mémoires de stockage distinctes d'un microprocesseur (100) dans lequel un registre d'option (NoTZIsolation) lu en premier lors d'une réinitialisation dudit microprocesseur conditionne la sélection d'un desdits programmes de démarrage.

## Description

### Domaine technique

La présente description concerne de façon générale les procédés de sélection de programmes de démarrage dans les microprocesseurs, ainsi que les microprocesseurs mettant en oeuvre de tels procédés.

### Technique antérieure

De nombreux circuits électroniques comme les microcontrôleurs y compris les systèmes sur puce (System On Chip, SOC, en anglais) comprennent une architecture qui permet de choisir le niveau de sécurisation des ressources et des mémoires qui sont utilisées par les applications mises en oeuvre dans ces circuits.

Cependant, certaines architectures ne permettent pas, de base, de choisir entre plusieurs niveaux de sécurisation.

### Résumé

Il existe un besoin de fournir des procédés pour permettre de choisir entre plusieurs niveaux de sécurisation dans un circuit ayant une architecture ne permettant pas, de base, de choisir entre plusieurs niveaux de sécurisation.

Un mode de réalisation pallie tout ou partie des inconvénients des procédés connus.

Un mode de réalisation prévoit un procédé de sélection de programmes de démarrage contenus chacun dans deux mémoires de stockage distinctes d'un microprocesseur dans lequel un registre d'option lu en premier lors d'une réinitialisation dudit microprocesseur conditionne la sélection d'un desdits programmes de démarrage.

Dans un mode de réalisation, un premier programme de démarrage est contenu dans une mémoire utilisateur et un deuxième programme de démarrage est contenu dans une mémoire système.

Dans un mode de réalisation, à l'initialisation du système, lorsque ledit registre d'option a une première valeur, le premier programme de démarrage est sélectionné.

Dans un mode de réalisation, à l'initialisation du système, lorsque ledit registre d'option a une autre valeur, le deuxième programme de démarrage est sélectionné.

Dans un mode de réalisation, le premier programme de démarrage, lorsqu'il est sélectionné, est configuré pour modifier une valeur d'un deuxième registre représentative de la taille d'une région d'accès interdit de la mémoire système contenant le deuxième programme de démarrage, de sorte que ledit deuxième programme de démarrage ne soit pas accessible.

Dans un mode de réalisation, le premier programme de démarrage, lorsqu'il est sélectionné, est configuré pour modifier une valeur du deuxième registre représentative de la taille d'une région d'accès interdit de la mémoire système contenant le deuxième programme de démarrage et un troisième programme de démarrage, de sorte que lesdits deuxième et troisième programmes de démarrage ne soient pas accessibles.

Dans un mode de réalisation, la valeur du deuxième registre peut seulement être incrémentée.

Dans un mode de réalisation, la modification de ladite valeur du deuxième registre consiste en une augmentation supérieure à un bit.

Dans un mode de réalisation, au moins une application est exécutable depuis la mémoire utilisateur après la sélection du premier programme de démarrage.

Dans un mode de réalisation, le premier programme de démarrage, lorsqu'il est sélectionné, met en oeuvre une configuration du microprocesseur pour qu'il soit dans un mode de sécurisation où, lorsqu'une transaction non-sécurisée requiert un accès à une ressource sécurisée du microprocesseur, alors une erreur est renvoyée.

Dans un mode de réalisation, le premier programme de démarrage, lorsqu'il est sélectionné, met en oeuvre une configuration du microprocesseur pour qu'il soit dans un mode de sécurisation où, lorsqu'une transaction sécurisée requiert un accès à une ressource non-sécurisée du microprocesseur, alors une erreur est renvoyée.

Dans un mode de réalisation, le premier programme de démarrage, lorsqu'il est sélectionné, permet la mise en oeuvre d'une fonction de débogage autorisée à accéder à une ou des régions de la mémoire correspondant à une valeur du deuxième registre contenant le deuxième programme de démarrage et le troisième programme de démarrage.

Dans un mode de réalisation, la mémoire utilisateur est une mémoire non volatile ou une mémoire de type RAM.

Dans un mode de réalisation, plusieurs applications sont exécutables depuis la mémoire utilisateur après l'utilisation du premier programme de démarrage et chacune de ces applications est dans un même mode de sécurisation.

Un mode de réalisation prévoit un microprocesseur, comprenant une mémoire système et une mémoire utilisateur, et configuré pour mettre en oeuvre un procédé tel que décrit ci-dessus.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un exemple de circuit intégré du type auquel s'appliquent les modes de réalisation décrits ;
la figure 2 illustre un mode de mise en oeuvre d'un procédé de sélection de programmes de démarrage du circuit de la figure 1 ; et
la figure 3 illustre un autre mode de mise en oeuvre d'un procédé de sélection de programmes de démarrage du circuit de la figure 1.

### Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

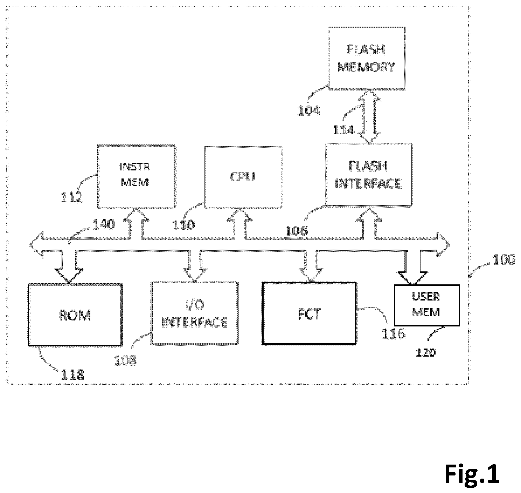

La figure 1 représente, de façon très schématique et sous forme de blocs, un exemple de circuit électronique 100 du type auquel s'appliquent les modes de réalisation décrits.

Le circuit 100 comprend une mémoire non-volatile 104 (FLASH MEMORY), par exemple de type mémoire FLASH, capable de communiquer, via un bus de communication 114, avec une interface de mémoire non-volatile 106 (FLASH INTERFACE) configurée pour écrire ou lire des données dans et depuis la mémoire non-volatile 104. Dans un exemple, des programmes et/ou applications systèmes, tels que des programmes de démarrage, sont mis en oeuvre dans la mémoire 104.

Le circuit 100 comprend en outre, par exemple, une unité de traitement 110 (CPU) comprenant un ou plusieurs processeurs sous contrôle d'instructions stockées dans une mémoire d'instructions système 112 (INSTR MEM). La mémoire d'instruction 112 est par exemple une mémoire volatile de type à accès aléatoire (en anglais Random Access Memory, RAM). L'unité de traitement 110 et la mémoire 112 communiquent, par exemple, via un bus système 140 (de données, d'adresses et de commande). La mémoire FLASH 104 est reliée au bus système 140 par l'intermédiaire de l'interface de mémoire non-volatile 106 et par l'intermédiaire du bus 114. Le dispositif 100 comprend en outre une interface d'entrée/sortie 108 (I/O interface) reliée au bus système 140 pour communiquer avec l'extérieur.

Le circuit 100 comprend en outre, par exemple une autre mémoire 120 (USER MEM) de type non volatile ou de type RAM. Cette mémoire 120 est reliée au bus système 140 directement ou par l'intermédiaire d'une interface de mémoire (non-illustrée) dont le rôle est par exemple similaire à l'interface 106.

Le dispositif 100 peut intégrer d'autres circuits mettant en oeuvre d'autres fonctions (par exemple, une ou plusieurs mémoires volatiles et/ou non-volatiles, d'autres unités de traitement), symbolisées par un bloc 116 (FCT) en figure 1. Parmi ces autres circuits, le circuit 100 comporte par exemple une mémoire morte ou statique 118 (ROM).

Un ou des programmes de démarrage du circuit sont par exemple transférés directement vers la mémoire 104 lors de processus de programmation en usine. Le ou les programmes de démarrage ne doivent pas être modifiés une fois transférés en mémoire flash 104, sauf réinitialisation du circuit 100. Pour ce faire, on prévoit de verrouiller l'accès à la zone de la mémoire flash contenant le programme de démarrage afin qu'il soit impossible d'y accéder hors redémarrage. Cela est fait par exemple en mettant en oeuvre un registre (HDPL), par exemple monotone croissant, dont la valeur est représentative de la taille d'une région d'accès interdit de la mémoire contenant le ou les programmes de démarrage, de sorte que le ou les programmes de démarrage ne soit pas accessibles. Par exemple, lorsque la valeur du registre HDPL est à 1, le programme de démarrage qui se trouve dans une région de la mémoire associée à la valeur 1 peut être exécuté. Après exécution, la valeur HDPL est incrémentée à 2 ce qui interdit l'accès au programme de démarrage situé dans la région de la mémoire associée à la valeur 2. Si un deuxième programme de démarrage a été chargé dans la mémoire dans des secteurs entre HDPL 1 et HDPL2, alors il peut être exécuté puis la valeur HDPL est incrémentée à 3 ce qui interdit l'accès aux deux programmes de démarrage situés dans les régions de la mémoire associées à la valeur 1 et 2. Des applications sont ensuite par exemple mises en oeuvre dans la mémoire sans avoir le même niveau de restriction d'accès.

Dans certaines architectures, comme par exemple celles de type ARM^{®} v8M ou ARM^{®} CORTEX^{®} M33, en sélectionnant une option lors du développement, les ressources ou mémoires du circuit mais aussi certains programmes peuvent être partitionnés avec différents niveaux de sécurité. Ce mécanisme s'appelle dans ces exemples « Trustzone ». Un premier niveau de sécurité (secure en anglais) est par exemple mis en oeuvre en instaurant que, lorsqu'une transaction non-sécurisée requiert un accès à une ressource sécurisée du microprocesseur, alors une erreur est renvoyée par exemple sur le bus 140 et lorsqu'une transaction sécurisée requiert un accès à une ressource non-sécurisée du microprocesseur, alors une erreur est également renvoyée. Le reste du circuit et/ou des programmes est alors par exemple mis en oeuvre avec des principes de sécurité moins strictes où par exemple les programmes ayant un niveau de sécurité inférieur au premier niveau peuvent accéder uniquement aux ressources et mémoires non-sécurisées du circuit 100.

Dans certaines architectures, comme par exemple celles de type ARM^{®} CORTEX^{®} M85, il n'y a pas d'options pour choisir de partitionner ou non les ressources, mémoires et programmes du circuit avec différents niveaux de sécurité. Dans ces architectures, seul le niveau de sécurité élevé est rendu disponible. En d'autres termes, dans ces architectures, le mécanisme « Trustzone » n'est pas nativement désactivable. Il y a donc de base une isolation (appelée par exemple TZIsolation) entre des ressources, mémoires ou programmes ayant le premier niveau de sécurité et un mode moins sécurisé. Cela peut poser des problématiques pour permettre de développer facilement des applications qui ne nécessitent pas de mettre en oeuvre une isolation de sécurité, comme par exemple le mécanisme « Trustzone », ou qui n'ont même simplement pas besoin d'être sécurisées.

Les modes de réalisation décrits prévoient de mettre en oeuvre un procédé de sélection de programmes de démarrage contenus chacun dans deux mémoires de stockage distinctes du microprocesseur dans lequel un registre d'option lu en premier lors d'une réinitialisation dudit microprocesseur conditionne la sélection d'un desdits programmes de démarrage.

Cela permet de s'affranchir par exemple de la mise en oeuvre systématique d'un système de partition des ressources, mémoires ou programme entre plusieurs niveaux de sécurité. Il est ainsi possible d'obtenir un seul niveau de sécurité ou de générer un seul et même niveau de sécurité pour l'ensemble des ressources, mémoires et programmes utilisés.

Cela permet en outre d'obtenir une solution logicielle permettant de faciliter le développement d'applications qui n'ont pas besoin d'un niveau de sécurité élevé. Un tel mode est par exemple connu sous le nom « legacy ».

Puisqu'il n'y a pas de modifications matérielles et pas de modifications du code embarqué nativement sur le circuit pour implémenter les modes de réalisation décrits, cela n'introduit pas de vulnérabilités supplémentaires en termes de sécurité.

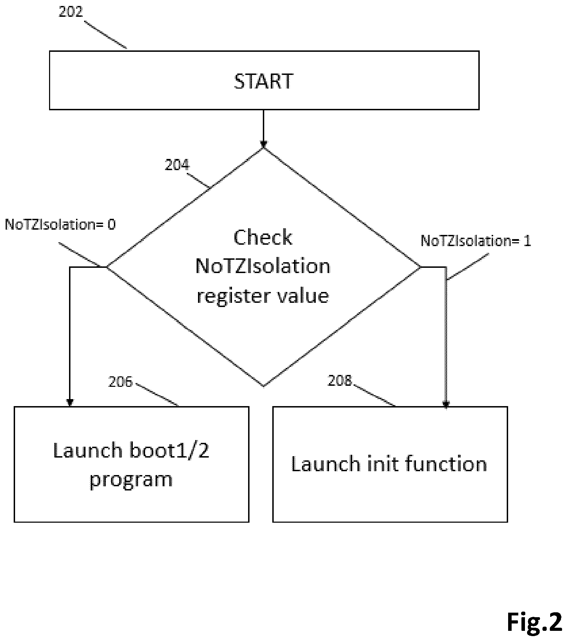

La figure 2 illustre un mode de mise en oeuvre d'un procédé de sélection de programmes de démarrage du circuit de la figure 1.

Dans une première étape 202 (START), le procédé démarre. Cette étape correspond par exemple à une réinitialisation du circuit 100.

Dans une deuxième étape 204 (Check NoTZIsolation register value), un registre NoTZIsolation est lu avant la mise en oeuvre de programmes de démarrage. Par exemple, si la valeur du registre NoTZIsolation=0, alors une étape 206 (Launch boot1/2 program) est mise en oeuvre, et si par exemple NoTZIsolation=1, alors une étape 208 (Launch init function) est mise en oeuvre.

Dans l'étape 206, un programme de démarrage boot1 est mis en oeuvre depuis une mémoire système du circuit 100. La mémoire système est par exemple la mémoire FLASH 104 ou la mémoire 112. Ce programme de démarrage boot1 permet par exemple la mise en oeuvre d'une partition entre les ressources ou mémoires du circuit mais aussi certains programmes avec différents niveaux de sécurité comme c'est le cas par exemple pour le mode « Trustzone » de la marque ARM^{®}.

Dans l'étape 208, un autre programme de démarrage, appelé également fonction d'initialisation (init), est mis en oeuvre depuis une mémoire utilisateur qui est par exemple la mémoire 120.

Dans un exemple, la fonction d'initialisation init est configurée pour modifier une valeur du registre HDPL représentative de la taille de région d'accès interdit de la mémoire système contenant le programme de démarrage boot1, de sorte que le programme de démarrage boot1, et d'éventuels autres programmes de démarrage situé juste après dans la mémoire système, ne soient pas accessibles ou exécutés avant la mise en oeuvre du programme de démarrage init. Lorsqu'il n'y a que le programme de démarrage boot1 dans la mémoire système, la modification de la valeur du registre HDPL, par la fonction d'initialisation init, consiste en une augmentation de la valeur HDPL d'un bit par exemple pour passer de 1 à 2. Le registre HDPL étant par exemple monotonique croissant, cela permet que le programme de démarrage boot1 ne soit pas mis en oeuvre car son accès n'est plus possible. Lorsqu'il y a par exemple un programme de démarrage boot2 en plus du programme de démarrage boot1 dans la mémoire système, la modification de la valeur du registre HDPL, par la fonction d'initialisation init, consiste en une augmentation de la valeur HDPL supérieure à un bit. HDPL passe alors par exemple de 1 à 3 ce qui permet qu'aucun des programmes de démarrage boot1 et boot2 ne soient mis en oeuvre car leur accès n'est plus possible. Seule la fonction d'initialisation init est mise en oeuvre en tant que programme de démarrage ce qui permet de s'affranchir par exemple de la mise en oeuvre systématique d'un système de partition des ressources, mémoires ou programme entre plusieurs niveaux de sécurité. Grâce à la fonction d'initialisation init, il est possible d'obtenir un seul niveau de sécurité ou de générer un seul et même niveau de sécurité pour l'ensemble des ressources, mémoires et programmes utilisés par des applications développées qui utilisent la fonction d'initialisation init.

Dans un exemple, le programme de démarrage init, lorsqu'il est sélectionné, met en oeuvre une configuration du microprocesseur pour qu'il soit dans un mode de sécurisation où, lorsqu'une transaction non-sécurisée (non-secure) requiert un accès à une ressource sécurisée du microprocesseur, alors une erreur est renvoyée sur le bus 140 par exemple.

Dans un autre exemple, lorsque le programme de démarrage init est sélectionné, il met en oeuvre une configuration du microprocesseur pour qu'il soit dans un mode de sécurisation où, lorsqu'une transaction sécurisée (secure) requiert un accès à une ressource non-sécurisée du microprocesseur, alors une erreur est renvoyée.

Dans un exemple, le registre NoTZIsolation est un registre externe au microprocesseur, c'est-à-dire non présent directement dans le circuit ou microcontrôleur 100. Il peut par exemple être présent, par exemple comme une option, dans un outil de programmation, ou programme, installé dans un ordinateur ou dans un circuit connecté au microprocesseur comme par exemple l'outil STM32CubeMx. L'outil de programmation permet par exemple la configuration du microprocesseur. L'outil de programmation est connecté au microprocesseur par exemple par un connecteur de type JTAG (Joint Test Action Group en anglais) ou mettant en oeuvre la norme IEEE 1149.1. Lorsque l'option "NoTZisolation" est sélectionnée dans l'outil de programmation, une fonction spécifique init va être téléchargée dans la mémoire utilisateur, par exemple une mémoire FLASH, du microprocesseur. La fonction init viendra ensuite configurer le microprocesseur dans un mode No TZ isolation de sorte que l'application s'exécute dans un seul environnement (Secure ou Non-secure).

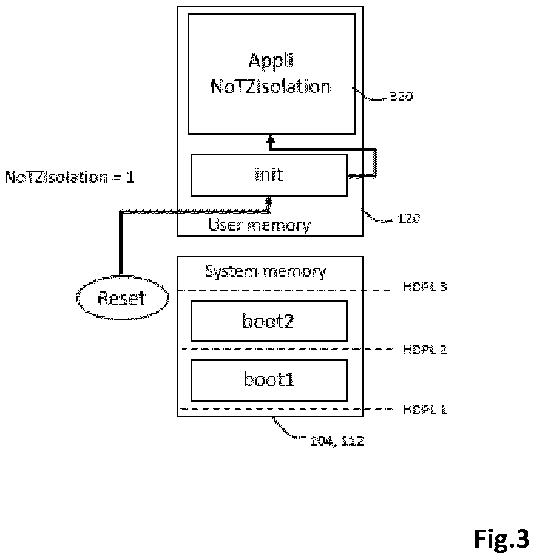

La figure 3 illustre un autre mode de mise en oeuvre d'un procédé de sélection de programmes de démarrage du circuit de la figure 1.

Plus particulièrement, l'exemple illustré décrit la mémoire utilisateur (User memory), implémentée par exemple par la mémoire 120, et la mémoire système (System memory) par exemple implémentée avec l'une des mémoires 104 ou 112.

Dans un exemple, la mémoire système est comprise dans une partie d'une mémoire non-volatile, par exemple FLASH réservée pour le fabricant du microprocesseur. Cette mémoire contient un programme du fabricant du microprocesseur. Ce programme comprend un programme de démarrage bootloader ainsi que des fonctions de sécurité par exemple. Cette mémoire système est programmée pendant la production du microprocesseur. Cette partie de la mémoire qu'est la mémoire système ne peut pas être modifiée par un utilisateur, comme par exemple un sous-traitant opérant ensuite dans la vie du microprocesseur.

Dans un exemple, la mémoire utilisateur est une partie de la mémoire non-volatile, par exemple FLASH, qui est réservée pour l'utilisateur, par exemple le sous-traitant utilisant le microprocesseur après la fabrication. Cette mémoire utilisateur comprend l'application ou programme utilisateur. Dans un exemple, les mémoires systèmes et utilisateur sont stockées dans deux mémoires non-volatiles différentes. Dans un autre exemple, les mémoires systèmes et utilisateur sont stockées dans deux régions différentes d'une même mémoire non-volatile, par exemple FLASH.

Dans l'exemple représenté, deux programmes de démarrage successifs boot1 et boot2 ont été au préalable chargé dans la mémoire système et la fonction d'initialisation init est présente dans la mémoire utilisateur 120 ou chargée lors d'une réinitialisation (Reset) du circuit 100.

Lors de la réinitialisation Reset du circuit 100, et comme dans l'exemple représenté, la valeur du registre NoTZIsolation est lue à 1 (NoTZIsolation=1) et ce avant que les programmes boot1 et boot2 ne soient mis en oeuvre.

A la réinitialisation Reset, l'unité de traitement 110 va démarrer en exécutant, éventuellement en la chargeant au préalable, la fonction d'initialisation init qui est donc d'abord mise en oeuvre. Cette fonction fait passer la valeur du registre HDPL de 1 à 3 pour empêcher la mise en oeuvre, par exemple l'exécution, des programmes de démarrage boot1 et boot2 qui auraient pu instaurer un partitionnement en termes de niveaux de sécurité des ressources, mémoires et programmes.

La fonction d'initialisation init configure par exemple le circuit 100 dans un mode de sécurisation où les ressources, mémoires d'application et programmes ont le même niveau de sécurisation, c'est-à-dire sans partitionnement avec plusieurs niveaux de sécurisation.

Une ou plusieurs applications 320 (Appli NoTZIsolation) sont ensuite exécutées avec le niveau de sécurisation instauré par la fonction d'initialisation init.

Dans un exemple, la fonction d'initialisation init, lorsqu'elle est sélectionnée, permet la mise en oeuvre d'une fonction de débogage autorisée à accéder à une ou des régions de la mémoire utilisateur 120 et/ou de la mémoire système 104, 112. Cette fonction de débogage peut, par exemple être cependant limitée à des applications sur des secteurs de mémoire correspondant à une valeur du registre HDPL supérieure ou égale à 2 si seul boot1 est présent ou supérieure ou égale à 3 si boot1 et boot2 sont présents par exemple.

Lorsque, lors de la réinitialisation Reset du circuit 100, la valeur du registre NoTZIsolation est lue à 0 (NoTZIsolation=0), alors les programmes boot1 et boot2 sont mis en oeuvre sans que la fonction d'initialisation init ne soit mise en oeuvre.

En fonction de la valeur du registre NoTZIsolation, des programmes de démarrage différents init, boot1/boot2 peuvent donc être exécutés. Une architecture de sécurisation différente peut donc être proposée en fonction de cette valeur lue à la réinitialisation Reset.

Divers modes de réalisation et variantes ont été décrits. La personne du métier comprendra que certaines caractéristiques de ces divers modes de réalisation et variantes pourraient être combinées, et d'autres variantes apparaîtront à la personne du métier.

Enfin, la mise en oeuvre pratique des modes de réalisation et variantes décrits est à la portée de la personne du métier à partir des indications fonctionnelles données ci-dessus. En particulier, pour ce qui est de la mémoire utilisateur, la personne du métier peut l'implémenter par exemple dans une région dédiée de la mémoire 104 qui est différente et isolée par rapport à la région dédiée au programme de démarrage boot1. De plus, même si les exemples décrits mentionnent la modification du registre HDPL pour implémenter la fonction d'initialisation init sans que ne soient mis en oeuvre boot1 et/ou boot2, la personne du métier pourra mettre en oeuvre n'importe quel mécanisme similaire, permettant d'empêcher la mise en oeuvre de programmes de démarrage boot1/boot2 après le lancement de la fonction d'initialisation init.

## Revendications

1. Procédé de sélection de programmes de démarrage (init, boot1) contenus chacun dans deux mémoires de stockage distinctes d'un microprocesseur (100) dans lequel un registre d'option (NoTZIsolation) lu en premier lors d'une réinitialisation dudit microprocesseur conditionne la sélection d'un desdits programmes de démarrage.

2. Procédé selon la revendication 1, dans lequel un premier programme de démarrage (init) est contenu dans une mémoire utilisateur (120) et un deuxième programme de démarrage (boot1) est contenu dans une mémoire système (104, 112).

3. Procédé selon la revendication 1 ou 2, dans lequel à l'initialisation du système, lorsque ledit registre d'option (NoTZIsolation) a une première valeur (NoTZIsolation=1), le premier programme de démarrage (init) est sélectionné.

4. Procédé selon la revendication 3, dans lequel, à l'initialisation du système, lorsque ledit registre d'option (NoTZIsolation) a une autre valeur (NoTZIsolation=0), le deuxième programme de démarrage (boot1) est sélectionné.

5. Procédé selon la revendication 3 ou 4, dans lequel le premier programme de démarrage (init), lorsqu'il est sélectionné, est configuré pour modifier une valeur d'un deuxième registre (HDPL) représentative de la taille d'une région d'accès interdit de la mémoire système (104, 112) contenant le deuxième programme de démarrage (boot1), de sorte que ledit deuxième programme de démarrage (boot1) ne soit pas accessible.

6. Procédé selon la revendication 5, dans lequel le premier programme de démarrage (init), lorsqu'il est sélectionné, est configuré pour modifier une valeur du deuxième registre (HDPL) représentative de la taille d'une région d'accès interdit de la mémoire système (104, 112) contenant le deuxième programme de démarrage (boot1) et un troisième programme de démarrage (boot2), de sorte que lesdits deuxième et troisième programmes de démarrage (boot1, boot2) ne soient pas accessibles.

7. Procédé selon la revendication 5 ou 6, dans lequel ladite valeur du deuxième registre (HDPL) peut seulement être incrémentée.

8. Procédé selon la revendication 6 ou 7, dans lequel la modification de ladite valeur du deuxième registre (HDPL) consiste en une augmentation supérieure à un bit (HDPL1 to HDPL3).

9. Procédé selon l'une quelconque des revendications 2, ou 3 à 8 dans sa dépendance à la revendication 2, dans lequel au moins une application (Appli NoTZIsolation) est exécutable depuis la mémoire utilisateur (120) après la sélection du premier programme de démarrage (init).

10. Procédé selon l'une quelconque des revendications 2, ou 3 à 9 dans sa dépendance à la revendication 2, dans lequel le premier programme de démarrage (init), lorsqu'il est sélectionné, met en oeuvre une configuration du microprocesseur (100) pour qu'il soit dans un mode de sécurisation où, lorsqu'une transaction non-sécurisée (non-secure) requiert un accès à une ressource sécurisée du microprocesseur, alors une erreur est renvoyée.

11. Procédé selon l'une quelconque des revendications 2, ou 3 à 10 dans sa dépendance à la revendication 2, dans lequel le premier programme de démarrage (init), lorsqu'il est sélectionné, met en oeuvre une configuration du microprocesseur (100) pour qu'il soit dans un mode de sécurisation où, lorsqu'une transaction sécurisée (secure) requiert un accès à une ressource non-sécurisée du microprocesseur (100), alors une erreur est renvoyée.

12. Procédé selon l'une quelconque des revendications 6 ou 7 à 11 dans sa dépendance à la revendication 6, dans lequel le premier programme de démarrage (init), lorsqu'il est sélectionné, permet la mise en oeuvre d'une fonction de débogage autorisée à accéder à une ou des régions de la mémoire correspondant à une valeur du deuxième registre (HDPL) contenant le deuxième programme de démarrage (boot1) et le troisième programme de démarrage (boot2).

13. Procédé selon l'une quelconque des revendications 2 à 12, dans lequel, la mémoire utilisateur (120) est une mémoire non volatile ou une mémoire de type RAM.

14. Procédé selon l'une quelconque des revendications 9 à 13 dans sa dépendance à la revendication 9, dans lequel plusieurs applications sont exécutables depuis la mémoire utilisateur (120) après l'utilisation du premier programme de démarrage (init) et dans lequel chacune de ces applications est dans un même mode de sécurisation.

15. Procédé selon l'une quelconque des revendications 1 à 14, dans lequel le registre d'option (NoTZIsolation) est externe au microprocesseur, de préférence dans un programme d'un ordinateur relié au microprocesseur.

16. Microprocesseur, comprenant une mémoire système (104,112) et une mémoire utilisateur (120), et configuré pour mettre en oeuvre le procédé selon l'une quelconque des revendications précédentes.
